# EUROPEAN PATENT APPLICATION

(11) **EP 4 053 788 A1**
(43) Date of publication of application: **07.09.2022**
(21) Application number: 19950305.3
(22) Date of filing: 30.10.2019
(51) Int. Cl.: G06T 7/00

(54) **AUTHENTICATION APPARATUS, AUTHENTICATION METHOD, AND RECORDING MEDIUM**

(71) Applicant: NEC Corporation, 108-8001 Tokyo (JP)
(72) Inventor: MIYAMOTO, Takamichi, Tokyo 108-8001 (JP)
(74) Representative: Betten & Resch
(86) International application number: PCT/JP2019/042533
(87) International publication number: WO 2021/084643

(57) **Abstract**

An authentication apparatus (2) includes: an iris authentication unit (217) for authenticating an authentication target based on iris feature information related to feature of an iris of the authentication target in a captured image (100) obtained by capturing an image of the authentication target (TP); and an image determination unit (214) for determining, based on face feature information related to feature of a face of the authentication target in the captured image, whether or not the captured image satisfies a predetermined condition that should be satisfied as an image used to authenticate the authentication target by using the iris feature information, an operation of the iris authentication unit in a case where it is determined that the captured image satisfies the predetermined condition is different from an operation of the iris authentication unit in a case where it is determined that the captured image does not satisfy the predetermined condition.

## Description

### Technical Field

The present disclosure relates to a technical field of an authentication apparatus and an authentication method that are configured to authenticate a authentication target, and a recording medium that allows a computer to execute the authentication method, for example.

### Background Art

An authentication apparatus that is configured to generate an information related to a feature of an iris (for example, an information related to a pattern of the iris) of an authentication target from a captured image that is obtained by capturing an image of the authentication target, and to authenticate the authentication target based on the generated information related to the feature of the iris (for example, see a Patent Literature 1 to a Patent Literature 3). Additionally, there is a Patent Literature 4, which is not a document disclosing the authentication apparatus that is configured to authenticate the authentication target based on the information related to the feature of the iris, as a background art document related to the present disclosure.

### Citation List

### Patent Literature

Patent Literature 1: JP2000-102524A
Patent Literature 2: JP2006-025968A
Patent Literature 3: JP2005-317049A
Patent Literature 4: WO2013/145496A1

### Summary

### Technical Problem

Depending on a situation where the image of the authentication target is captured, the captured image that is obtained by capturing the image of the authentication target is not always an image that is suitable to authenticate the authentication target based on the information related to the feature of the iris of the authentication target. For example, a most part of the iris is hidden by an eyelid in the captured image that is obtained by capturing the image of the authentication target who closes an eye or is about to close the eye. Thus, it is difficult to generate the information related to the feature of the iris from this image, and as a result, this image cannot be said to be the image that is suitable to authenticate the authentication target based on the information related to the feature of the iris. Even in this case, there is a possibility that the authentication apparatus disclosed in the Patent Literature 1 to the Patent Literature 3 described above generates the information related to the feature of the iris of the authentication target from the captured image that cannot be said to be the image that is suitable to authenticate the authentication target and authenticates the authentication target based on the generated information related to the feature of the iris. However, when the captured image cannot be said to be the image that is suitable to authenticate the authentication target, there is a possibility that an authentication accuracy deteriorates.

It is an example object of the present disclosure to provide an authentication apparatus, an authentication apparatus, an authentication method and a recording medium that are configured to solve the above described technical problem. As one example, it is an example object of the present disclosure to provide an authentication apparatus, an authentication method and a recording medium that are configured to reduce a deterioration of an authentication accuracy.

### Solution to Problem

One example aspect of an authentication apparatus includes: an iris authentication unit that is configured to authenticate an authentication target based on an iris feature information related to a feature of an iris of the authentication target in a captured image that is obtained by capturing an image of the authentication target; and a determination unit that is configured to determine, based on a face feature information related to a feature of a face of the authentication target in the captured image, whether or not the captured image satisfies a predetermined condition that should be satisfied as an image used to authenticate the authentication target by using the iris feature information, an operation of the iris authentication unit in a case where it is determined that the captured image satisfies the predetermined condition is different from an operation of the iris authentication unit in a case where it is determined that the captured image does not satisfy the predetermined condition.

One example aspect of an authentication method includes: an authentication step at which an authentication target is authenticated based on an iris feature information related to a feature of an iris of the authentication target in a captured image that is obtained by capturing an image of the authentication target; and a determination step at which it is determined, based on a face feature information related to a feature of a face of the authentication target in the captured image, whether or not the captured image satisfies a predetermined condition that should be satisfied as an image used to authenticate the authentication target by using the iris feature information, an operation performed at the authentication step in a case where it is determined that the captured image satisfies the predetermined condition being different from an operation performed at the authentication step in a case where it is determined that the captured image does not satisfy the predetermined condition.

One example aspect of a recording medium is a recording medium on which a computer program that allows a computer to execute an authentication method is recorded, the authentication method includes: an authentication step at which an authentication target is authenticated based on an iris feature information related to a feature of an iris of the authentication target in a captured image that is obtained by capturing an image of the authentication target; and a determination step at which it is determined, based on a face feature information related to a feature of a face of the authentication target in the captured image, whether or not the captured image satisfies a predetermined condition that should be satisfied as an image used to authenticate the authentication target by using the iris feature information, an operation performed at the authentication step in a case where it is determined that the captured image satisfies the predetermined condition being different from an operation performed at the authentication step in a case where it is determined that the captured image does not satisfy the predetermined condition.

### Effect

One example aspect of each of the authentication apparatus, the authentication method and the recording medium described above is capable of reducing a deterioration of an authentication accuracy based on the iris feature information, compared to a case where the operation in the case where it is determined that the captured image satisfies the predetermined condition is absolutely same as the operation in the case where it is determined that the captured image does not satisfy the predetermined condition.

### Brief Description of Drawings

[FIG. 1] FIG. 1 is a block diagram that illustrates an entire configuration of an authentication system in a present example embodiment.
[FIG. 2] FIG. 2 is a flow chart that illustrates a flow of an authentication operation that is performed by an authentication apparatus in the present example embodiment.
[FIG. 3] FIG. 3 is a planar view that illustrates one example of a captured image.
[FIG. 4] FIG. 4 is a planar view that illustrates one example of a plurality of face feature points detected on a face image.
[FIG. 5] FIG. 5 is a planar view that illustrates one example of an authentication target included in the captured image.
[FIG. 6] FIG. 6 is a planar view that illustrates one example of the authentication target included in the captured image.
[FIG. 7] FIG. 7 is a planar view that illustrates one example of the authentication target included in the captured image.
[FIG. 8] Each of FIG. 8A and FIG. 8B is a planar view that illustrates one example of the authentication target included in the captured image.
[FIG. 9] FIG. 9A is a planar view that conceptionally illustrates the authentication target that faces a direction in which a camera exists and FIG. 9B is a planar view that conceptionally illustrates the authentication target that faces a direction that is different form the direction in which the camera exists.
[FIG. 10] FIG. 10A is a planar view that conceptionally illustrates the authentication target that faces a direction that is laterally away from the direction in which the camera exists and FIG. 10B is a planar view that conceptionally illustrates the authentication target that faces a direction that is downwardly away from the direction in which the camera exists.
[FIG. 11] FIG. 11 is a planar view that conceptionally illustrates the authentication target that faces a direction that is upwardly away from the direction in which the camera exists.
[FIG. 12] FIG. 12 is a planar view that illustrates one example of the authentication target included in the captured image.
[FIG. 13] FIG. 13 is a planar view that illustrates one example of the authentication target included in the captured image.
[FIG. 14] FIG. 14 is a flow chart that illustrates a flow of an authentication operation that is performed by an authentication system in a first modified example.
[FIG. 15] FIG. 15 is a block diagram that illustrates a configuration of an authentication apparatus in a second modified example.

### Description of Example Embodiments

Next, an example embodiment of an authentication apparatus, an authentication method and a recording medium will be described with reference to the drawings. In the below described description, an authentication system SYS to which the example embodiment of the authentication apparatus, the authentication method and the recording medium is applied will be described.

### (1) Configuration of Authentication System SYS

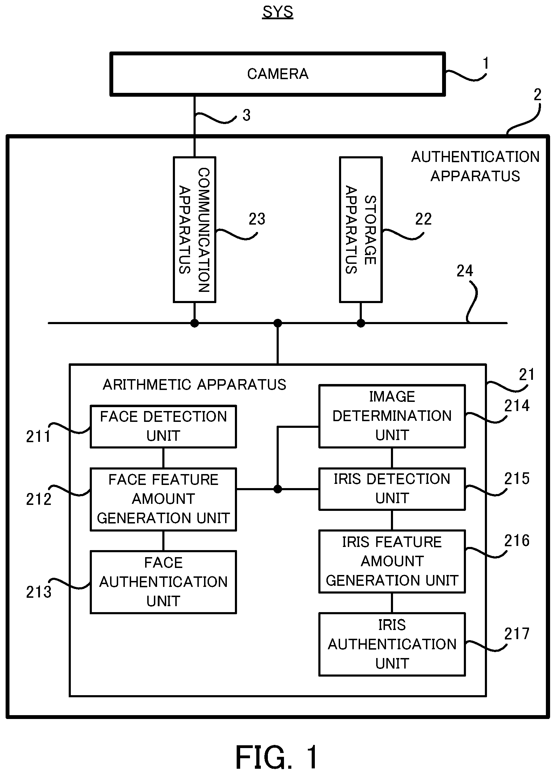

Firstly, with reference to FIG. 1, a configuration of the authentication system SYS in a present example embodiment will be described. FIG. 1 is a block diagram that illustrates the configuration of the authentication system SYS in the present example embodiment.

The authentication system SYS authenticates (in other words, identifies or determines) an authentication target TP based on a feature of a face of the authentication target TP (for example, a person). Furthermore, the authentication system SYS authenticates the authentication target TP based on a feature of an iris of the authentication target TP. In order to authenticate the authentication target TP, as illustrated in FIG. 1, the authentication system SYS includes a camera 1 and an authentication apparatus 2. The camera 1 and the authentication apparatus 2 are connected to communicate with each other through a communication network 3. The communication network 3 may include a wired network and may include a wireless network.

The camera 1 is an imaging apparatus that is configured to capture an image of the authentication target TP. Especially, the camera 1 capture an image of the face of the authentication target TP. Thus, the camera 1 captures the image of the authentication target TP at a timing at which the face of the authentication target TP is included in an imaging range (in other words, an imaging angle of view) of the camera 1. A captured image 100 that is obtained by the camera 1 capturing the image of the authentication target TP is used to authenticate the authentication target TP based on the feature of the face of the authentication target TP and the feature of the iris of the authentication target TP. Thus, it is preferable that the camera 1 have a resolution that allows the feature of the face and the feature of the iris (typically, a pattern of the iris) of the authentication target TP to be identified from the captured image 100.

The authentication apparatus 2 obtains (namely, receives) the captured image 100 captured by the camera 1 through the communication network 3. The authentication apparatus 2 performs an authentication operation for authenticating the authentication target TP included in the captured image 100 based on the obtained captured image 100. In order to perform the authentication operation, the authentication apparatus 2 includes an arithmetic apparatus 21, a storage apparatus 22 and a communication apparatus 23. The arithmetic apparatus 21, the storage apparatus 22 and the communication apparatus 23 are interconnected through a data bus 24.

The arithmetic apparatus 21 includes at least one of a CPU (Central Processing Unit) and GPU (Graphic Processing Unit), for example. The arithmetic apparatus 21 reads a computer program. For example, the arithmetic apparatus 21 may read a computer program stored in the storage apparatus 22. For example, the arithmetic apparatus 21 may read a computer program stored in a computer-readable non-transitory recording medium, by using a not-illustrated recording medium reading apparatus. The arithmetic apparatus 21 may obtain (namely, download or read) a computer program from a not-illustrated apparatus placed outside the authentication apparatus 2 through the communication apparatus 23. The arithmetic apparatus 21 executes the read computer program. As a result, a logical functional block for performing an operation (specifically, the above described authentication operation) that should be performed by the authentication apparatus 2 is implemented in the arithmetic apparatus 21. Namely, the arithmetic apparatus 21 is configured to serve as a controller for implementing the logical block for performing the authentication operation.

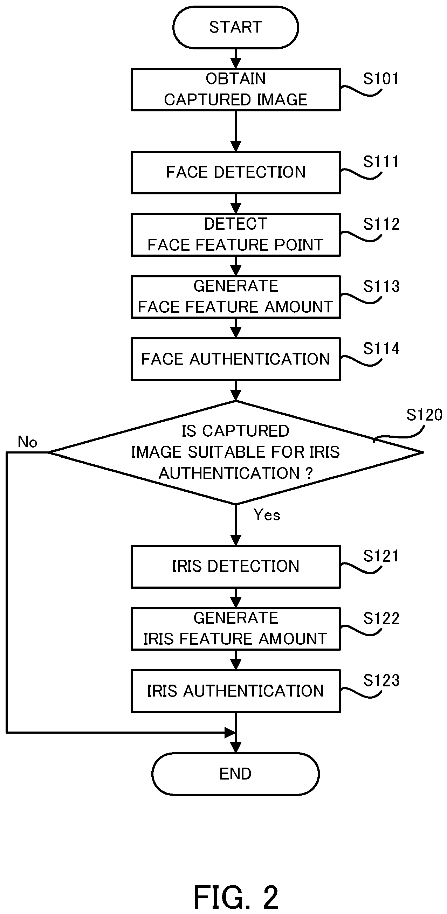

FIG. 1 illustrates one example of the logical functional block that is implemented in the arithmetic apparatus 21 for performing the authentication operation. As illustrated in FIG. 1, a face detection unit 211, a face feature amount generation unit 212, a face authentication unit 213, an image determination unit 214, an iris detection unit 215, an iris feature amount generation unit 216 and an iris authentication unit 217 are implemented in the arithmetic apparatus 21 as the logical functional blocks. The face detection unit 211, the face feature amount generation unit 212 and the face authentication unit 213 mainly perform a face authentication operation for authenticating the authentication target TP based on the feature of the face of the authentication target TP. The iris detection unit 215, the iris feature amount generation unit 216 and the iris authentication unit 217 mainly perform an iris authentication operation for authenticating the authentication target TP based on the feature of the face of the authentication target TP. Namely, in the present example embodiment, the authentication operation is an operation including the face authentication operation and the iris authentication operation. A detail of an operation of each of the face detection unit 211, the face feature amount generation unit 212, the face authentication unit 213, the image determination unit 214, the iris detection unit 215, the iris feature amount generation unit 216 and the iris authentication unit 217 will be described in detail later with reference to FIG. 2 and so on, and thus, a description thereof is omitted here. Note that the face feature amount generation unit 212 is one example of a generation unit. The face authentication unit 213 is one example of a face authentication unit. The image determination unit 214 is one example of a determination unit. The iris authentication unit 217 is one example of an iris authentication unit.

The storage apparatus 22 is configured to store desired data. For example, the storage apparatus 22 may temporarily store the computer program that is executed by the arithmetic apparatus 21. The storage apparatus 22 may temporarily store data temporarily used by the arithmetic apparatus 21 when the arithmetic apparatus 21 executes the computer program. The storage apparatus 22 may store data stored for a long term by the authentication apparatus 2. Note that the storage apparatus 22 may include at least one of a RAM (Random Access Memory), a ROM (Read Only Memory), a hard disk apparatus, a magneto-optical disc, a SSD (Solid State Drive) and a disk array apparatus. Namely, the storage apparatus 22 may include a non-transitory recording medium.

The communication apparatus 23 is configured to communicate with the camera 1 through the communication network 3. In the present example embodiment, the communication apparatus 23 is configured to obtain (namely, receive) the captured image 100 captured by the camera 1 from the camera 1 through the communication network 3.

### (2) Authentication Operation performed by Authentication Apparatus 2

Next, with reference to FIG. 2, the authentication operation performed by the authentication apparatus 2 will be described. FIG. 2 is a flowchart that illustrates a flow of the authentication operation performed by the authentication apparatus 2.

As illustrated in FIG. 2, the communication apparatus 23 obtains the captured image 100 that is captured by the camera 1 through the communication network 3 (a step S101). Namely, the communication apparatus 23 obtains the captured image 100 every time the camera 1 captures the captured image 100 (the step S101). After the communication apparatus 23 obtains the captured image 100, operations from a step S111 to a step S123 described below are performed. Therefore, it can be said that the authentication apparatus 2 substantially starts the authentication operation illustrated in FIG. 2 (especially, the operations from a step S111 to a step S123 described below) every time the camera 1 captures the captured image 100.

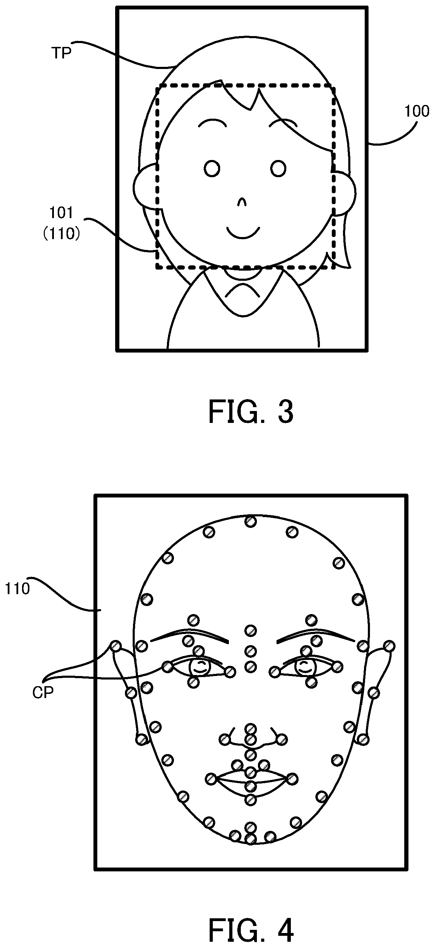

Then, the face detection unit 211 detects the face of the authentication target TP included in the captured image 100 obtained as the step S101 (a step S111). The face detection unit 211 may detect the face of the authentication target TP included in the captured image 100 by using an existing method of detecting a face of a person included in an image. Here, one example of detecting the face of the authentication target TP included in the captured image 100 will be described. As illustrated in FIG. 3 that is a planar view illustrating one example of the captured image 100, there is a possibility that the captured image 100 includes not only the face of the authentication target TP but also a part of the authentication target TP other than the face and a background of the authentication target TP. Thus, the face detection unit 211 determines a face region 101 in which the face of the authentication target TP is included from the captured image 100. The face region 101 is a rectangular region, however, may be a region having another shape. The face detection unit 211 extracts, as a face image 110, an image part of the captured image 100 that is included in the determined face region 101.

Then, the face feature amount generation unit 212 detects a plurality of feature points of the face (hereinafter, they are referred to as "face feature points CP") of the authentication target TP based on the face image 110 (a step S112). For example, as illustrated in FIG. 4 that is a planar view illustrating one example of the plurality of face feature points CP detected on the face image 110, the face feature amount generation unit 212 detects, as the face feature point CP, a characterized part of the face of the authentication target TP included in the face image 110. In an example illustrated in FIG. 4, the face feature amount generation unit 212 detects, as the plurality of face feature points CP, at least a part of an outline of the face, an eye, a brow, a glabella, an ear, a nose, a mouth and a jaw of the authentication target TP. Note that FIG. 4 (furthermore, a drawing described below) omits a hair of the authentication target TP for simplification of drawing.

Then, the face feature amount generation unit 212 generates (in other words, calculates or determines) a feature amount of the face of the authentication target TP based on the plurality of face feature points CP detected at the step S112 (a step S113). The feature amount of the face (hereinafter, it is referred to as a "face feature amount") of the authentication target TP is any information related to the feature of the face of the authentication target TP. For example, the face feature amount is any information that quantitatively (alternatively, qualitatively) represents the feature of the face of the authentication target TP. Typically, the face feature amount is an information (for example, a vector information) that quantitatively represents the plurality of face feature points CP. Note that the face feature amount is one example of a face feature information.

Then, the face authentication unit 213 authenticates, based on the face feature amount generated as the step S113, the authentication target TP the face of which is detected at the step S111 (a step S114). The face authentication unit 213 may authenticate the authentication target TP by using an existing method (namely, an existing face authentication method) for authenticating a person based on the face feature amount. Here, one example of the method of authenticating the authentication target TP based on the face feature amount will be described. The face authentication unit 213 searches, from a face authentication DB (DataBase), a record satisfying a face authentication condition that is determined based on the face feature amount generated at the step S113. The face authentication DB includes a plurality of records in each of which the face feature amount of one person is associated with an identification information for uniquely identifying the one person. The face feature amount included in each record is one example of a comparison feature information that is compared with the face feature amount generated at the step S113. In this case, the face authentication unit 213 searches the record satisfying the face authentication condition by comparing the face feature amount generated at the step S113 with the face feature amount included in the face authentication DB. For example, the face authentication unit 213 may search, from the face authentication DB, the record satisfying the face authentication condition that it includes the face feature amount same as the face feature amount generated at the step S113. The record that includes the face feature amount same as the face feature amount generated at the step S113 means the record including the face feature amount whose similarity degree to the face feature amount generated at the step S113 is higher than a predetermined threshold value TH_face. When there is the record satisfying the face authentication condition in the face authentication DB, the face authentication unit 213 authenticates that the authentication target TP is the person that is identified by the identification information included in the record satisfying the face authentication condition. When there is not the record satisfying the face authentication condition in the face authentication DB, the face authentication unit 213 determines that the authentication target TP is a person that cannot be authenticated. Namely, the face authentication unit 213 determines that the authentication target TP cannot be authenticated.

In parallel with, after or before the operations from the step S113 to the step S114 (namely, a part of the face feature operation), the image determination unit 214 determines whether or not the captured image 100 obtained at the step S101 satisfies a predetermined condition that should be satisfied as the captured image 100 used to perform the iris authentication operation (a step S120). In the present example embodiment, the predetermined condition is a condition that the captured image 100 is an image that is suitable for the iris authentication operation. Thus, in the present example embodiment, it is assumed that the image determination unit 214 determines whether or not the captured image 100 is the image that is suitable for the iris authentication operation at the step S120. Here, the image that is suitable for the iris authentication operation may mean an image that allows the feature amount of the iris of the authentication target TP included in the captured image 100 to be properly generated from the captured image 100. Moreover, when the feature amount of the iris (hereinafter, it is referred to as an "iris feature amount") is properly generated, there is a relatively higher possibility that an authentication accuracy of the iris authentication operation is kept equal to or higher than a certain level, compared to a case where the iris feature amount is not properly generated. Thus, the image that is suitable for the iris authentication operation may mean an image that allows the authentication accuracy of the iris authentication operation to be kept equal to or higher than a certain level.

Especially in the present example embodiment, the image determination unit 214 determines based on the plurality of face feature points CP detected at the step S112 whether or not the captured image 100 is the image that is suitable for the iris authentication operation. Next, one example of an operation for determining based on the plurality of face feature points CP whether or not the captured image 100 is the image that is suitable for the iris authentication operation will be described.

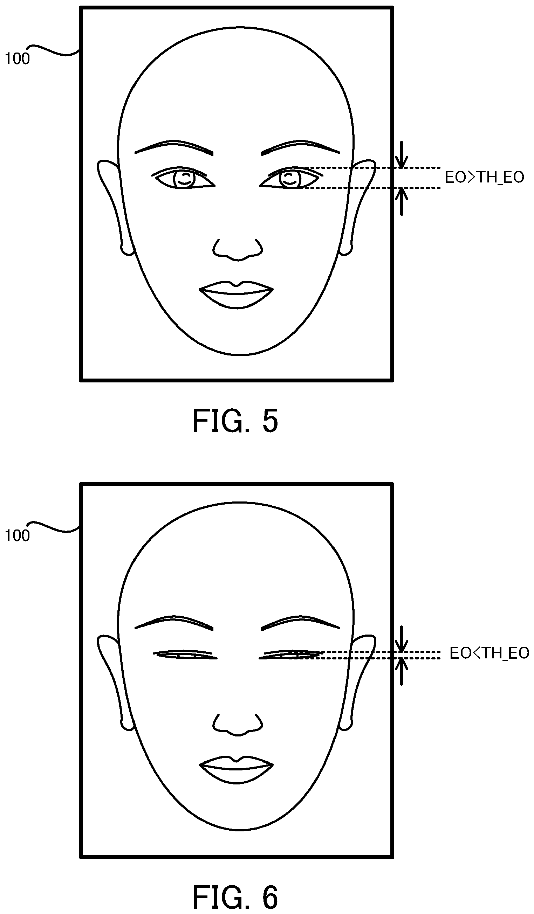

The image determination unit 214 may determine based on an opening degree EO of the eye of the authentication target TP included in the captured image 100 whether or not the captured image 100 is the image that is suitable for the iris authentication operation. Namely, the predetermined condition may include a first condition related to the opening degree EO of the eye of the authentication target TP. Note that the opening degree EO of the eye is an index value that is larger as the eye opens more widely. For example, as illustrated in FIG. 5 that is a planar view illustrating the authentication target TP included in the captured image 100, when the eye of the authentication target TP opens relatively widely, it is expected that a most part of the iris of the authentication target TP is included in the captured image 100. Therefore, when the eye of the authentication target TP opens relatively widely, there is expected to be a relatively high possibility that the iris feature amount is properly generated and thus the authentication target TP is properly authenticated by the iris authentication operation. Namely, there is expected to be a relatively high possibility that the authentication target TP that should be authenticated as one person is properly authenticated as the one person by the iris authentication operation. On the other hand, as illustrated in FIG. 6 that is a planar view illustrating the authentication target TP included in the captured image 100, when the eye of the authentication target TP does not open relatively widely (for example, closes at least partially), the iris of the authentication target TP is hidden at least partially by the eyelid. As a result, it is expected that a part (alternatively, a most part) of the iris of the authentication target TP is not included in the captured image 100. Therefore, when the eye of the authentication target TP does not open relatively widely, there may be a possibility that the iris feature amount is not properly generated and thus the authentication target TP is not properly authenticated by the iris authentication operation. Namely, there may be possibility that the authentication target TP that should be authenticated as one person is not authenticated as the one person by the iris authentication operation. In some case, there may be possibility that the authentication target TP that should be authenticated as one person is erroneously authenticated as another person that is different from the one person by the iris authentication operation.

Thus, the image determination unit 214 may determine whether or not the opening degree EO of the eye of the authentication target TP is larger than a predetermined opening degree TH_EO, in order to determine whether or not the captured image 100 is the image that is suitable for the iris authentication operation. When the opening degree EO of the eye of the authentication target TP is larger than the predetermined opening degree TH_EO (see FIG. 5), the image determination unit 214 may determine that the captured image 100 is the image that is suitable for the iris authentication operation. On the other hand, when the opening degree EO of the eye of the authentication target TP is smaller than the predetermined opening degree TH_EO (see FIG. 6), the image determination unit 214 may determine that the captured image 100 is not the image that is suitable for the iris authentication operation. Note that it is preferable that the predetermined opening degree TH_EO be set to be a desired value that allows a state in which the eye of the authentication target TP (alternatively, a general person) opens relatively widely and thus the iris authentication operation is properly performed to be distinguished based on the opening degree EO of the eye from a state in which the eye of the authentication target TP does not open relatively widely and thus there is a possibility that the iris authentication operation is not properly performed.

The image determination unit 214 may calculate the opening degree EO of the eye based on the face feature point CP related to the eye of the plurality of face feature points CP. For example, the image determination unit 214 may calculate, as the opening degree EO of the eye, an aspect ratio of the eye (for example, a ratio of a size of the eye in a vertical direction to a size of the eye in a horizontal direction) of the authentication target TP based on the face feature point CP related to the eye. For example, the image determination unit 214 may calculate, as the opening degree EO of the eye, the size of the eye of the authentication target TP in the vertical direction.

However, there is different with each person in the opening degree EO of the eye. Thus, when the predetermined opening degree TH_EO is fixed, even though the authentication target TP having a relatively small eye opens the eye relatively widely, there is a possibility that the opening degree EO of the authentication target TP is determined to be smaller than the predetermined opening degree TH_EO. Namely, in a situation where the authentication target TP opens the eye relatively widely and thus the captured image 100 should be determined to be the image that is suitable for the iris authentication operation, there is a possibility that the captured image 100 is erroneously determined not to be the image that is suitable for the iris authentication operation due to an erroneous determination that the authentication target TP does not open the eye relatively widely. Alternatively, even though the authentication target TP having a relatively wide eye does not open the eye relatively widely, there is a possibility that the opening degree EO of the authentication target TP is determined to be larger than the predetermined opening degree TH_EO. Namely, in a situation where the authentication target TP does not open the eye relatively widely and thus the captured image 100 should be determined not to be the image that is suitable for the iris authentication operation, there is a possibility that the captured image 100 is erroneously determined to be the image that is suitable for the iris authentication operation due to an erroneous determination that the authentication target TP opens the eye relatively widely.

Thus, the image determination unit 214 may determine based on a temporal variation of the opening degree EO of the eye of the authentication target TP whether or not the opening degree EO of the authentication target TP is larger than the predetermined opening degree TH_EO. For example, when the camera 1 sequentially captures the image of the authentication target TP and thus a plurality of captured images 100 are obtained, the image determination unit 214 may determine the temporal variation of the opening degree EO of the eye by calculating the opening degree EO of the eye for each of the plurality of captured images 100. As a result, the image determination unit 214 can determine a maximum value of the opening degree EO of the eye of the authentication target TP. In this case, the image determination unit 214 may change the predetermined opening degree TH_EO so that the predetermined opening degree TH_EO becomes smaller as the maximum value of the opening degree EO of the eye of the authentication target TP becomes smaller. As a result, the image determination unit 214 is capable of properly determining whether or not the captured image 100 is the image that is suitable for the iris authentication operation regardless of an individual difference of the opening degree EO of the eye of the authentication target TP. Of course, depending on the set value of the predetermined opening degree TH_EO, the image determination unit 214 is capable of properly determining whether or not the captured image 100 is the image that is suitable for the iris authentication operation even when the predetermined opening degree TH_EO is fixed.

Alternatively, the image determination unit 214 may use, as the opening degree EO of the eye, a value that is obtained by normalizing the opening degree EO of the eye at a certain time (namely, an instantaneous value of the opening degree EO of the eye determined by a certain captured image 100) with the maximum value (alternatively, an average value) of the opening degree EO of the eye. Even in this case, the image determination unit 214 is capable of properly determining whether or not the captured image 100 is the image that is suitable for the iris authentication operation regardless of the individual difference of the opening degree EO of the eye of the authentication target TP.

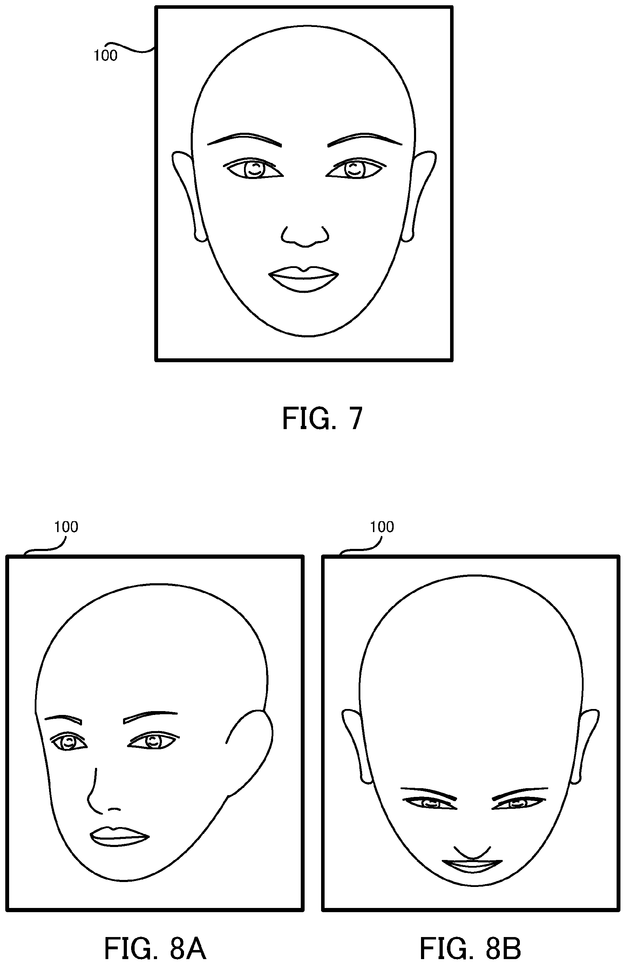

The image determination unit 214 may determine based on a direction of the face of the authentication target TP included in the captured image 100 whether or not the captured image 100 is the image that is suitable for the iris authentication operation. Namely, the predetermined condition may include a second condition related to the direction of the face of the authentication target TP. For example, as illustrated in FIG. 7 that is a planar view illustrating the authentication target TP included in the captured image 100, when the authentication target TP faces a direction in which the camera 1 exists (the authentication target TP faces the camera 1 squarely), the camera 1 is capable of capturing the image of the iris of the authentication target TP squarely. Thus, when the authentication target TP faces the direction in which the camera 1 exists, there is expected to be a relatively higher possibility that the iris feature amount is properly generated and thus the authentication target TP is properly authenticated by the iris authentication operation, compared to a case where the authentication target TP faces a direction that is different from the direction in which the camera 1 exists. On the other hand, as illustrated in FIG. 8A and FIG. 8B each of which is a planar view illustrating the authentication target TP included in the captured image 100, when the authentication target TP faces the direction that is different from the direction in which the camera 1 exists, the camera 1 captures the image of the iris of the authentication target TP obliquely. Note that FIG. 8A illustrates the authentication target TP that faces a direction laterally away from (namely, a direction horizontally away from) the direction in which the camera 1 exists and FIG. 8B illustrates the authentication target TP that faces a direction downwardly away from (namely, a direction vertically away from) the direction in which the camera 1 exists. Thus, when the authentication target TP faces the direction that is different from the direction in which the camera 1 exists, there is a possibility that the iris feature amount is not properly generated and thus the authentication target TP is not properly authenticated by the iris authentication operation, compared to a case where the authentication target TP faces the direction in which the camera 1 exists.

Thus, the image determination unit 214 may determine whether or not the authentication target TP faces the direction in which the camera 1 exists, in order to determine whether or not the captured image 100 is the image that is suitable for the iris authentication operation. When the authentication target TP faces the direction in which the camera 1 exists (see FIG. 7), the image determination unit 214 may determine that the captured image 100 is the image that is suitable for the iris authentication operation. On the other hand, when the authentication target TP faces the direction that is different from the direction in which the camera 1 exists (see FIG. 8A and FIG. 8B), the image determination unit 214 may determine that the captured image 100 is not the image that is suitable for the iris authentication operation.

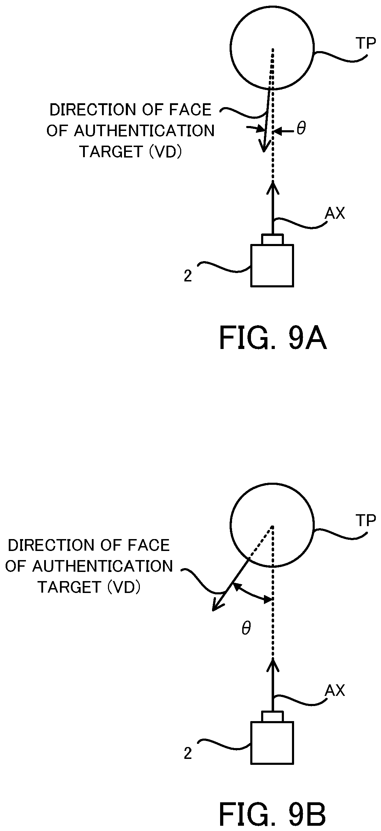

Here, when the authentication target TP faces the direction in which the camera 1 exists, an angle θ between a direction in which the face of the authentication target TP faces and a direction in which an optical axis AX of the camera 1 extends is relatively small, as illustrated in FIG. 9A that conceptionally illustrates the authentication target TP facing the direction in which the camera 1 exists. In other words, when the authentication target TP faces the direction that is different from the direction in which the camera 1 exists, the angle θ between the direction in which the face of the authentication target TP faces and the direction in which the optical axis AX of the camera 1 extends is relatively large, as illustrated in FIG. 9B that conceptionally illustrates the authentication target TP facing the direction that is different from the direction in which the camera 1 exists. Thus, the image determination unit 214 may determine whether or not the angle θ between the direction in which the face of the authentication target TP faces and the direction in which the optical axis AX of the camera 1 extends is smaller than a predetermined angle TH_θ, in order to determine whether or not the authentication target TP faces the direction in which the camera 1 exists. In other words, the image determination unit 214 may determine whether or not the angle θ between an axis VD along the direction in which the face of the authentication target TP faces and the direction in which the optical axis AX of the camera 1 extends is smaller than a predetermined angle TH_θ. When the angle θ is smaller than the predetermined angle TH_θ, the image determination unit 214 may determine that the authentication target TP faces the direction in which the camera 1 exists. When the angle θ is larger than the predetermined angle TH_θ, the image determination unit 214 may determine that the authentication target TP faces the direction that is different from the direction in which the camera 1 exists. Note that it is preferable that the predetermined angle TH_θ be set to be a desired value that allows a state in which the authentication target TP faces the direction in which the camera 1 exists and thus the iris authentication operation is properly performed to be distinguished based on the angle θ (namely, the direction of the face of the authentication target TP relative to the camera 1) from a state in which the authentication target TP faces the direction that is different from the direction in which the camera 1 exists and thus there is a possibility that the iris authentication operation is not properly performed.

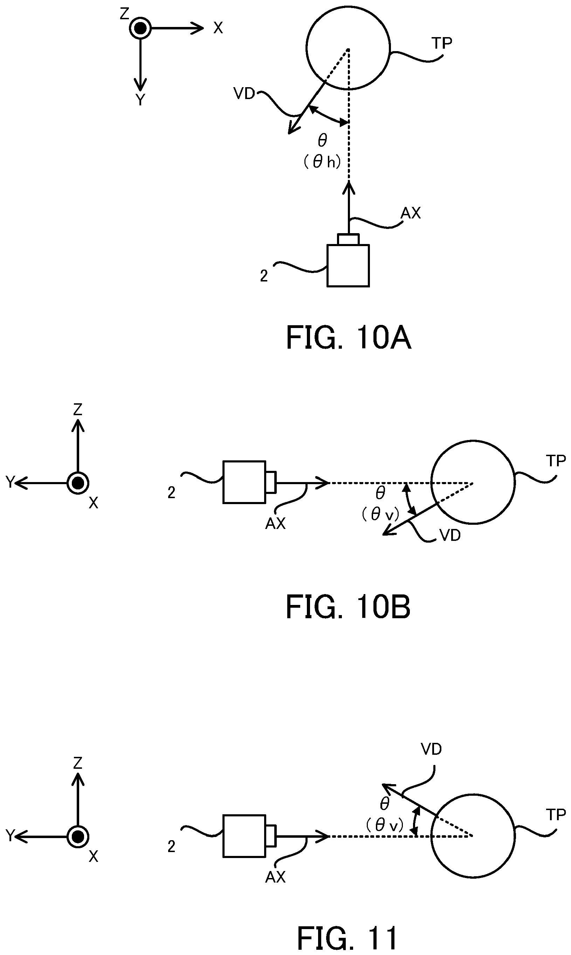

Here, as illustrated in FIG. 8A and FIG. 8B described above, a state where the authentication target TP faces the direction that is different from the direction in which the camera 1 exists includes a state where the authentication target TP faces the direction that is laterally away from (namely, the direction that is horizontally away from) the direction in which the camera 1 exists and a state where the authentication target TP faces the direction that is upwardly / downwardly away from (namely, the direction that is vertically away from) the direction in which the camera 1 exists. Thus, the image determination unit 214 may determine whether or not an angle θ_h that is the angle θ between the axis VD along the direction in which the face of the authentication target TP faces and the direction in which the optical axis AX of the camera 1 extends in a horizontal plane (an XY plane that is perpendicular to a Z axis extending vertically in FIG. 10A) is smaller than a predetermined angle TH_θ_h that is one example of the predetermined angle TH_θ as illustrated in FIG. 10A, and determine whether or not an angle θ_v that is the angle θ between the axis VD along the direction in which the face of the authentication target TP faces and the direction in which the optical axis AX of the camera 1 extends in a vertical plane (an YZ plane in FIG. 10B) is smaller than a predetermined angle TH_θ_v that is one example of the predetermined angle TH_θ as illustrated in FIG. 10B. When the angle θ_h is smaller than the predetermined angle TH_θ_h and the angle θ_v is smaller than the predetermined angle TH_θ_v, the image determination unit 214 may determine that the authentication target TP faces the direction in which the camera 1 exists. On the other hand, when the angle θ_h is larger than the predetermined angle TH_θ_h and / or the angle θ_v is larger than the predetermined angle TH_θ_v, the image determination unit 214 may determine that the authentication target TP faces the direction that is different from the direction in which the camera 1 exists.

Moreover, the state where the authentication target TP faces the direction that is upwardly / downwardly away from (namely, the direction that is vertically away from) the direction in which the camera 1 exists includes not only the state where the authentication target TP faces the direction that is downwardly away from the direction in which the camera 1 exists as illustrated in FIG. 8B but also a state where the authentication target TP faces the direction that is upwardly away from the direction in which the camera 1 exists. Here, when the authentication target TP faces the direction that is upwardly away from the direction in which the camera 1 exists in a situation where the angle θ_v is certain one angle, there is a higher possibility that the camera 1 properly captures the image of the iris, compared to a case where the authentication target TP faces the direction that is downwardly away from the direction in which the camera 1 exists in a situation where the angle θ_v is the same one angle. This is because there is a higher possibility that an object such as the eyelid and an eyelash that interferes with the proper capturing of the image of the image is located between the iris and the camera 1 when the authentication target TP faces the direction that is downwardly away from the direction in which the camera 1 exists, compared to the case where the authentication target TP faces the direction that is upwardly away from the direction in which the camera 1 exists. Thus, image determination unit 214 may set the predetermined angle TH_θ_v so that the predetermined angle TH_θ_v (hereinafter, it is referred to as a "predetermined angle TH_θ_v_down" that is compared with the angle θ_v in the case where the authentication target TP faces the direction that is downwardly away from the direction in which the camera 1 exists as illustrated in FIG. 10B is different from the predetermined angle TH_θ_v (hereinafter, it is referred to as a "predetermined angle TH_θ_v_up" that is compared with the angle θ_v in the case where the authentication target TP faces the direction that is upwardly away from the direction in which the camera 1 exists as illustrated in FIG. 11. Typically, the predetermined angle TH_θ_v may be set so that the predetermined angle TH_θ**_**v_down is smaller than the predetermined angle TH_θ_v_up. As a result, when the authentication target TP faces the direction that is downwardly away from the direction in which the camera 1 exists and thus the camera 1 is not capable of properly capturing the image of the image of the iris easily, it is more likely to determine that the authentication target TP faces the direction that is different from the direction in which the camera 1 exists, because it is more likely to determine that the angle θ_v is larger than the predetermined angle TH_θ_v. Namely, it is more likely to determine that the captured image 100 is not the image that is suitable for the iris authentication operation.

The image determination unit 214 may calculate the direction of the face of the authentication target TP based on the plurality of face feature points CP. For example, the image determination unit 214 may calculate a degree of symmetry of at least one of the eye, the brow, the glabella, the ear, the nose, the mouth and the jaw in the horizontal direction based on the plurality of face feature points CP, and calculated the direction of the face of the authentication target TP based on the calculated degree of symmetry.

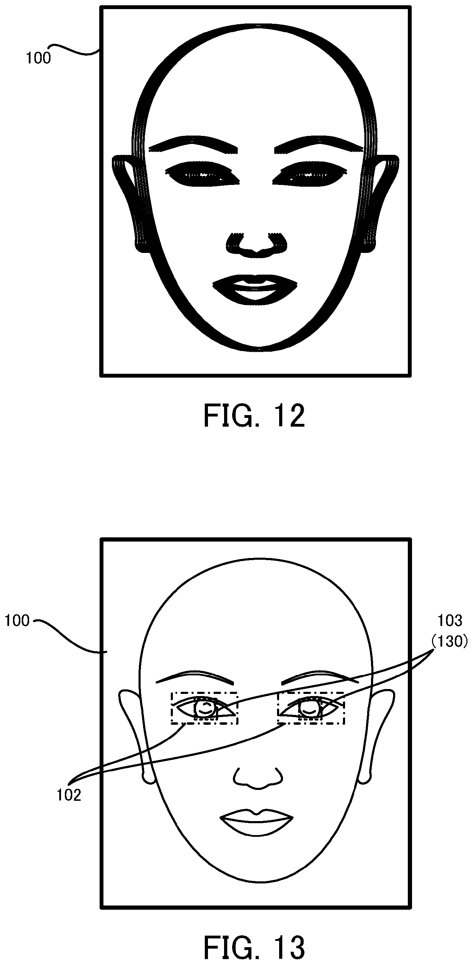

The image determination unit 214 may determine based on a degree of a bokeh of the face of the authentication target TP included in the captured image 100 whether or not the captured image 100 is the image that is suitable for the iris authentication operation. Namely, the predetermined condition may include a third condition related to the bokeh of the face of the authentication target TP. For example, as illustrated in FIG. 12 that is a planar view illustrating the authentication target TP included in the captured image 100, when the degree of the bokeh of the face of the authentication target TP is relatively high, there is a possibility that the iris of the authentication target TP having a relatively high degree of the bokeh is included in the captured image 100. This is because the iris is included in the face and thus the degree of the bokeh of the iris of the authentication target TP correlates with the degree of the bokeh of the face of the authentication target TP. Therefore, when the degree of the bokeh of the face of the authentication target TP is relatively high, there is a possibility that the iris feature amount is not properly generated and thus the authentication target TP is not properly authenticated by the iris authentication operation, compared to a case where the degree of the bokeh of the face of the authentication target TP is relatively low.

Thus, the image determination unit 214 may determine whether or not the degree of the bokeh of the face of the authentication target TP included in the captured image 100 is within an allowable value TH_B, in order to determine whether or not the captured image 100 is the image that is suitable for the iris authentication operation. When the degree of the bokeh of the face of the authentication target TP is within the allowable value TH_B (namely, the degree of the bokeh of the face of the authentication target TP is relatively low) (see FIG. 5 and so on), the image determination unit 214 may determine that the captured image 100 is the image that is suitable for the iris authentication operation. On the other hand, when the degree of the bokeh of the face of the authentication target TP is not within the allowable value TH_B (namely, the degree of the bokeh of the face of the authentication target TP is relatively high) (see FIG. 12), the image determination unit 214 may determine that the captured image 100 is not the image that is suitable for the iris authentication operation. Note that it is preferable that the allowable value TH_B be set to be a desired value that allows a state in which the degree of the bokeh of the face of the authentication target TP is relatively low and thus the iris authentication operation is properly performed to be distinguished based on the degree of the bokeh of the face from a state in which the degree of the bokeh of the face of the authentication target TP is relatively high and thus there is a possibility that the iris authentication operation is not properly performed.

The image determination unit 214 may calculate the degree of the bokeh of the face of the authentication target TP based on the plurality of face feature points CP. For example, the bokeh of the face of the authentication target TP is generated when the authentication target TP moves (namely, shakes) relative to the camera 1 relatively fast or the camera 1 moves (namely, shakes) relative to the authentication target TP relatively fast. Thus, the image determination unit 214 may calculate the degree of the bokeh of the face of the authentication target TP based on a moving distance per unit time of the face feature point CP that indicates the same part of the authentication target TP. For example, the image determination unit 214 may calculate the degree of the bokeh of the face of the authentication target TP so that the degree of the bokeh of the face of the authentication target TP becomes larger as the moving distance per unit time of the same face feature point CP becomes larger.

However, there is a possibility that the bokeh of the face of the authentication target TP is generated when a focus position of an optical system (for example, a lens) of the camera 1 is not properly positioned relative to the authentication target TP. In this case, the image determination unit 214 may calculate the degree of the bokeh of the face of the authentication target TP without using the plurality of face feature points CP. For example, the image determination unit 214 may detect an edge of the authentication target TP included in the captured image 100 and calculate the degree of the bokeh of the face of the authentication target TP so that the degree of the bokeh of the face of the authentication target TP becomes larger as the edge becomes relatively larger (in other words, thicker)

Again in FIG. 2, as a result of the determination at the step S120, when it is determined that the captured image 100 is the image that is suitable for the iris authentication operation (the step S120: Yes), the authentication apparatus 2 performs the iris authentication operation (a step S121 to a step S123). Specifically, firstly, the iris detection unit 215 detects the iris of the authentication target TP included in the captured image 100 obtained at the step S101 (alternatively, the face image 110 detected at the step S111) (the step S121). Especially in the present example embodiment, the iris detection unit 215 detects the iris of the authentication target TP based on the plurality of face feature points CP detected at the step S112 for performing the face authentication operation. Especially, the iris detection unit 215 detects the iris of the authentication target TP based on the face feature points CP related to the eye. Specifically, as illustrated in FIG. 13, the iris detection unit 215 determines, based on the face feature point CP (especially, the face feature points CP related to the eye), an eye region 102 in which the eye of the authentication target TP is included from the captured image 100. The eye region 102 is a rectangular region, however, may be a region having another shape. Then, the iris detection unit 215 determines an iris region 103 in which the iris of the authentication target TP is included from the determined eye region 102. Namely, the iris detection unit 215 may determine the iris region 103 from the eye region 102 that is a part of the captured image 100 instead of determining (namely, searching) the iris region 103 from whole of the captured image 100. Thus, a processing load of the authentication apparatus 2 that is required to determine the iris region 103 is reduced. The iris region 103 is a rectangular region, however, may be a region having another shape. The iris detection unit 215 extracts, as an iris image 130, an image part of the captured image 100 that is included in the determined iris region 103.

Then, the iris feature amount generation unit 216 generates (in other words, calculates or determines) a feature amount of the iris of the authentication target TP based on the iris image 130 (the step S122). The feature amount of the iris (hereinafter, it is referred to as an "iris feature amount") of the authentication target TP is any information related to the feature of the iris of the authentication target TP. For example, the iris feature amount is any information that quantitatively (alternatively, qualitatively) represents the feature of the iris of the authentication target TP. Typically, the iris feature amount is an information (for example, a vector information) that quantitatively represents the pattern of the iris. Note that the iris feature amount is one example of an iris feature information.

Then, the iris authentication unit 217 authenticates, based on the iris feature amount generated as the step S122, the authentication target TP the iris of which is detected at the step S121 (the step S123). The iris authentication unit 217 may authenticate the authentication target TP by using an existing method (namely, an existing iris authentication method) for authenticating a person based on the iris feature amount. Here, one example of the method of authenticating the authentication target TP based on the iris feature amount will be described. The iris authentication unit 217 searches, from a iris authentication DB (DataBase), a record satisfying an iris authentication condition that is determined based on the iris feature amount generated at the step S122. The iris authentication DB includes a plurality of records in each of which the iris feature amount of one person is associated with an identification information for uniquely identifying the one person. The iris feature amount included in each record is one example of a comparison feature information that is compared with the iris feature amount generated at the step S122. In this case, the iris authentication unit 217 searches the record satisfying the iris authentication condition by comparing the iris feature amount generated at the step S122 with the iris feature amount included in the iris authentication DB. For example, the iris authentication unit 217 may search, from the iris authentication DB, the record satisfying the iris authentication condition that it includes the iris feature amount same as the iris feature amount generated at the step S122. The record that includes the iris feature amount same as the iris feature amount generated at the step S122 means the record including the iris feature amount whose similarity degree to the iris feature amount generated at the step S122 is higher than a predetermined threshold value TH_iris. When there is the record satisfying the iris authentication condition in the iris authentication DB, the iris authentication unit 217 authenticates that the authentication target TP is the person that is identified by the identification information included in the record satisfying the iris authentication condition. When there is not the record satisfying the iris authentication condition in the iris authentication DB, the iris authentication unit 217 determines that the authentication target TP is a person that cannot be authenticated. Namely, the iris authentication unit 217 determines that the authentication target TP cannot be authenticated.

Then, the authentication apparatus 2 ends the authentication operation illustrate in FIG. 2. After the authentication operation illustrate in FIG. 2 is ended, the authentication apparatus 2 may start the authentication operation illustrate in FIG. 2 again after a predetermined time elapses. Namely, the authentication apparatus 2 may start the process at the step S101 again after ending the process at the step S123. In other words, the authentication operation illustrate in FIG. 2 may be performed repeatedly.

On the other hand, as a result of the determination at the step S120, when it is determined that the captured image 100 is not the image that is suitable for the iris authentication operation (the step S120: No), the authentication apparatus 2 does not perform the iris authentication operation (the step S121 to the step S123). Specifically, the iris detection unit 215 does not detect the iris of the authentication target TP, the iris feature amount generation unit 216 does not generate the iris feature amount, and the iris authentication unit 217 does not authenticate the authentication target TP based on the iris feature amount. Namely, when it is determined that the captured image 100 is not the image that is suitable for the iris authentication operation, the authentication apparatus 2 (especially, the iris detection unit 215, the iris feature amount generation unit 216 and the iris authentication unit 217 that are the functional blocks for performing the iris authentication operation) performs an operation that is different from that in a case where it is determined that the captured image 100 is the image that is suitable for the iris authentication operation. Then, the authentication apparatus 2 ends the authentication operation illustrate in FIG. 2. After the authentication operation illustrate in FIG. 2 is ended, the authentication apparatus 2 may start the authentication operation illustrate in FIG. 2 again after a predetermined time elapses. Namely, the authentication apparatus 2 may start the process at the step S101 again when it is determined that the captured image 100 is not the image that is suitable for the iris authentication operation (the step S120: No).

### (3) Technical Effect of Authentication System SYS

The above described authentication system SYS does not perform the iris authentication operation when it is determined that the captured image 100 is not the image that is suitable for the iris authentication operation. Thus, there is a low possibility that the authentication target TP that should be authenticated as one person is erroneously authenticated as another person that is different from the one person by the iris authentication unit 217. Alternatively, there is a low possibility that the iris authentication unit 217 erroneously determines that the authentication target TP that should be authenticated as one person is the person that cannot be authenticated. Thus, a deterioration of an authentication accuracy of the authentication apparatus 2 is reduced, compared to an authentication system in a comparison example that generates the iris feature amount based on the captured image 100 that cannot be said to be the image suitable for the iris authentication operation and authenticates the authentication target TP based on the generated iris feature amount. Namely, the authentication apparatus 2 is capable of authenticating the authentication target TP while keeping the relatively high authentication accuracy. Typically, the authentication apparatus 2 is capable of authenticating the authentication target TP while keeping the authentication accuracy equal to or higher than a certain level.

Moreover, the authentication apparatus 2 determines based on the information generated for performing the face authentication operation (specifically, the plurality of face feature points CP) whether or not the captured image 100 is the image that is suitable for the iris authentication operation. Thus, a dedicated information for determining whether or not the captured image 100 is the image that is suitable for the iris authentication operation may not be generated separately from the information generated for performing the face authentication operation. Thus, the authentication apparatus 2 is capable of determining whether or not the captured image 100 is the image that is suitable for the iris authentication operation with a relatively lower processing load, compared to an authentication apparatus in a comparison example that needs to generate the dedicated information for determining whether or not the captured image 100 is the image that is suitable for the iris authentication operation.

Moreover, the authentication apparatus 2 may determine the iris region 103 from the eye region 102 that is a part of the captured image 100 instead of determining the iris region 103 from whole of the captured image 100. Namely, the authentication apparatus 2 may detect the iris from the eye region 102 that is a part of the captured image 100 instead of detecting the iris from whole of the captured image 100. This is because the authentication apparatus 2 diverts the information generated for performing the face authentication operation (specifically, the plurality of face feature points CP) in order to detect the iris. Thus, the authentication apparatus 2 is capable of detecting the iris with a relatively lower processing load, compared to an authentication apparatus in a comparison example that needs to detect the iris from whole of the captured image 100.

Moreover, the authentication apparatus 2 is capable of using at least one of the first condition related to the opening degree EO of the eye of the authentication target TP, the second condition related to the direction of the face of the authentication target TP and the third condition related to the bokeh of the face of the authentication target TP in order to determine whether or not the captured image 100 is the image that is suitable for the iris authentication operation. Thus, the authentication apparatus 2 is capable of properly determining whether or not the captured image 100 is the image that is suitable for the iris authentication operation.

### (4) Modified Example of Authentication System SYS

Next, a modified example of the authentication system SYS will be described. Note that a detailed description of the component that is already described is omitted by assigning the same reference number thereto. Moreover, a detailed description of the operation that is already described is omitted by assigning the same step number thereto.

### (4-1) Authentication System SYS in First Modified Example

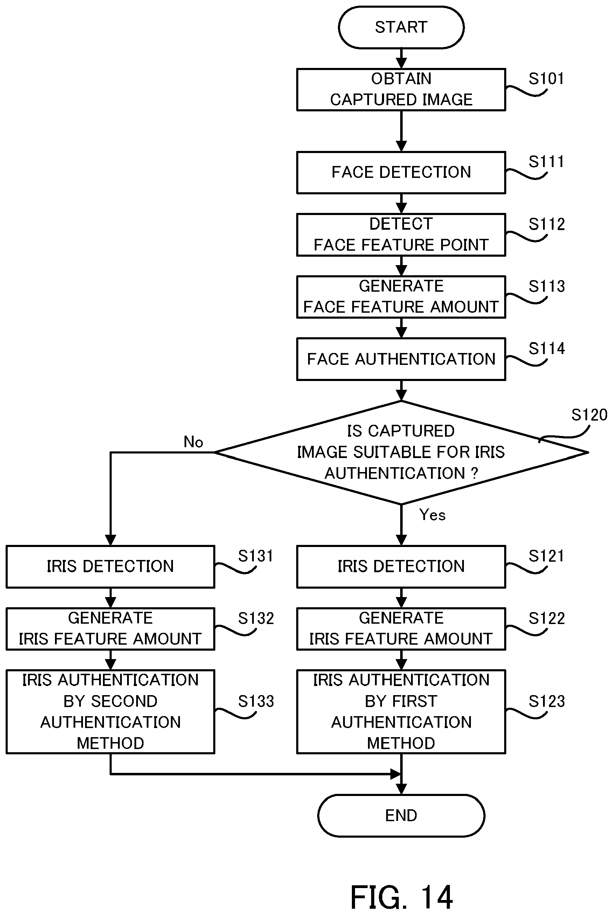

Firstly, the authentication system SYS in a first modified example (hereinafter, the authentication system SYS in the first modified example is referred to as an "authentication system SYSa") will be described. The authentication system SYSa in the first modified example is different from the above described authentication system SYS in that a part of the authentication operation is different. Another feature of the authentication system SYSa in the first modified example may be same as another feature of the above described authentication system SYS. Thus, in the below described description, with reference to FIG. 14, the authentication operation that is performed by the authentication system SYSa in the first modified example will be described. FIG. 14 is a flowchart that illustrates a flow of the authentication operation that is performed by the authentication system SYSa in the first modified example.

As illustrated in FIG. 14, even in the first modified example, the authentication apparatus 2 performs the operations from the step S101 to the step S120. Furthermore, even in the first modified example, when it is determined that the captured image 100 is the image that is suitable for the iris authentication operation at the step S120 (the step S120: Yes), the authentication apparatus 2 performs the iris authentication operation from the step S121 to the step S123.

On the other hand, in the first modified example, even when it is determined that the captured image 100 is not the image that is suitable for the iris authentication operation at the step S120 (the step S120: No), the authentication apparatus 2 performs the iris authentication operation (a step S131 to a step S133). Specifically, the iris detection unit 215 detects the iris of the authentication target TP included in the captured image 100 obtained at the step S101 (alternatively, the face image 110 detected at the step S111) (the step S131). Furthermore, the iris feature amount generation unit 216 generates the feature amount of the iris of the authentication target TP based on the iris image 130 (the step S132). Note that the operation at the step S131 may be same as the operation at the step S121. Moreover, the operation at the step S132 may be same as the operation at the step S122.

Then, the iris authentication unit 217 authenticates, based on the iris feature amount generated as the step S132, the authentication target TP the iris of which is detected at the step S131 (the step S133). Specifically, the iris authentication unit 217 authenticates the authentication target TP by searching the record satisfying the iris authentication condition from the iris authentication DB. Namely, the iris authentication unit 217 authenticates the authentication target TP by searching the record including the iris feature amount whose similarity degree to the iris feature amount generated at the step S122 is higher than the predetermined threshold value TH_iris.

However, the method of authenticating the authentication target TP at the step S133 is different form the method of authenticating the authentication target TP at the step S123. Namely, the iris authentication unit 217 authenticates the authentication target TP based on the iris feature amount by using a first authentication method when it is determined that the captured image 100 is the image that is suitable for the iris authentication operation, and authenticates the authentication target TP based on the iris feature amount by using a second authentication method that is different from the first authentication method when it is determined that the captured image 100 is not the image that is suitable for the iris authentication operation.

For example, the first and second authentication methods may be different in that the predetermined threshold value TH_iris that is used by the first authentication method is different from the predetermined threshold value TH_iris that is used by the second authentication method. For example, the first and second authentication methods may be different in that the predetermined threshold value TH_iris that is used by the second authentication method is larger than the predetermined threshold value TH_iris that is used by the first authentication method. It is more difficult to satisfy the iris authentication condition that it includes the iris feature amount whose similarity degree to the iris feature amount generated at the step S132 is higher than the predetermined threshold value TH_iris as the predetermined threshold value TH_iris becomes larger. Thus, it can be said that the first and second authentication methods are different in that a possibility that the record satisfying the iris authentication condition exists in the second authentication method is lower than that in the first authentication method. Namely, the possibility that the record satisfying the iris authentication condition exists in the second authentication method, which uses the iris feature amount of low accuracy generated based on the captured image 100 that cannot be said to be the image suitable for the iris authentication operation, is lower than that in the first authentication method. As a result, there is a low possibility that the authentication target TP that should be authenticated as one person is erroneously authenticated as another person that is different from the one person by the iris authentication unit 217 based on the iris feature amount information of low accuracy. Thus, the deterioration of the authentication accuracy of the authentication target TP is reduced, because an erroneous authentication of the authentication target TP is reduced.

Alternatively, for example, the first and second authentication methods may be different in that the number of the captured image 100 necessary for generating the iris feature amount used in the first authentication method is different from the number of the captured image 100 necessary for generating the iris feature amount used in the second authentication method. For example, the first and second authentication methods may be different in that the number of the captured image 100 necessary for generating the iris feature amount used in the second authentication method is larger than the number of the captured image 100 necessary for generating the iris feature amount used in the first authentication method. In this case, the iris authentication unit 217 searches the record satisfying the relatively strict iris authentication condition that it includes the iris feature amount whose similarity degree to all of the plurality of iris feature amounts, which are respectively generated as temporal-series data from the plurality of captured images 100 that are transmitted from the camera 1 as temporal-series data, is higher than the predetermined threshold value TH_iris. Thus, the iris authentication unit 217 does not authenticate that the authentication target TP is a certain person unless the record satisfying the relatively strict iris authentication condition is searched. It can be said that the first and second authentication methods are different in that the possibility that the record satisfying the iris authentication condition exists in the second authentication method is lower than that in the first authentication method, because it is more difficult to satisfy the iris authentication condition (namely, the iris authentication condition is stricter) as the number of the iris feature amount is larger. Namely, the possibility that the record including the iris feature amount whose similarity degree to all of the plurality of iris feature amounts of low accuracy is higher than the predetermined threshold value TH_iris exists in the second authentication method, which uses the plurality of iris feature amounts of low accuracy respectively generated based on the plurality of captured images 100 including the captured image 100 that cannot be said to be the image suitable for the iris authentication operation, is lower than that in the first authentication method. As a result, there is a low possibility that the authentication target TP that should be authenticated as one person is erroneously authenticated as another person that is different from the one person by the iris authentication unit 217 based on the iris feature amount information of low accuracy. Thus, the deterioration of the authentication accuracy of the authentication target TP is reduced, because an erroneous authentication of the authentication target TP is reduced.

In this manner, the authentication system SYSa in the first modified example is capable of achieving the effect, which is achievable by the above described authentication system SYS, to some extent.

### (4-2) Authentication System SYS in Second Modified Example

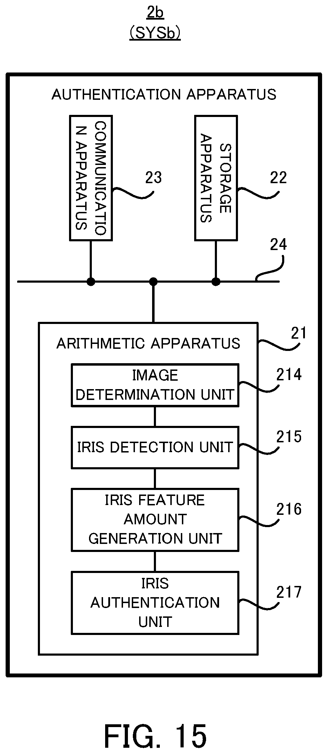

Next, the authentication system SYS in a second modified example (hereinafter, the authentication system SYS in the second modified example is referred to as an "authentication system SYSb") will be described. The authentication system SYSb in the second modified example is different from the above described authentication system SYS in that it includes an authentication apparatus 2b instead of the authentication apparatus 2. Another feature of the authentication system SYSb in the second modified example may be same as another feature of the above described authentication system SYS. Thus, in the below described description, with reference to FIG. 15, the authentication apparatus 2b in the second modified example will be described. FIG. 14 is a block diagram that illustrates a configuration of the authentication apparatus 2b in the second modified example.

As illustrated in FIG. 15, the authentication apparatus 2b in the second modified example is different from the above described authentication apparatus 2 in that the logical functional block for performing the face authentication operation may not be implemented in the arithmetic apparatus 21. The authentication apparatus 2b is different from the authentication apparatus 2 in that at least one of the face detection unit 211, the face feature amount generation unit 212 and the face authentication unit 213 may not be implemented in the arithmetic apparatus 21. FIG. 2 illustrates an example in which all of the face feature amount generation unit 212 and the face authentication unit 213 are not implemented in the arithmetic apparatus 21. Another feature of the authentication apparatus 2b in the second modified example may be same as another feature of the above described authentication apparatus 2.

However, as described above, the image determination unit 214 uses the information generated for performing the face authentication operation (for example, the face feature point CP) in order to determine whether or not the captured image 100 is the image that is suitable for the iris authentication operation. Moreover, the iris detection unit 215 uses the information generated for performing the face authentication operation (for example, the face feature point CP) in order to detect the iris. Thus, in the second modified example, the communication apparatus 23 may obtain an information related to the feature of the face of the authentication target TP (for example, an information related to the face feature point CP and the like) from an outside of the authentication apparatus 2b. The information related to the feature of the face of the authentication target TP obtained by the communication apparatus 23 may be used to determine whether or not the captured image 100 is the image that is suitable for the iris authentication operation by the image determination unit 214 and / or in order to detect the iris by the iris detection unit 215. Alternatively, even when the authentication apparatus 2 does not perform the face authentication operation, the authentication apparatus 2 may include the face detection unit 211 and / or the face feature amount generation unit 212. An information related to the face region 101 (the face image 110) detected by the face detection unit 211 and / or an information related to the face feature amount (alternatively, the face feature point CP) generated by the face feature amount generation unit 212 may be used to determine whether or not the captured image 100 is the image that is suitable for the iris authentication operation by the image determination unit 214 and / or in order to detect the iris by the iris detection unit 215.

### (4-3) Other Modified Example

In the above described description, the image determination unit 214 determines, based on the plurality of face feature points CP detected at the step S112 in FIG. 2 to perform the face authentication operation, whether or not the captured image 100 is the image that is suitable for the iris authentication operation. However, the mage determination unit 214 may determine, based on any information that is generated to perform the face authentication operation, whether or not the captured image 100 is the image that is suitable for the iris authentication operation. For example, mage determination unit 214 may determine, based on the face feature amount that is generated at the step S113 in FIG. 2 to perform the face authentication operation, whether or not the captured image 100 is the image that is suitable for the iris authentication operation. For example, the mage determination unit 214 may determine, based on the information related to the face region 101 (alternatively, the face image 110 that is the image part of the captured image 100 including the face region 101) detected at the step S111 in FIG. 2 to perform the face authentication operation, whether or not the captured image 100 is the image that is suitable for the iris authentication operation. Alternatively, the mage determination unit 214 may determine, based on an information related to the feature of the face of the authentication target TP that is generated independently from the face authentication operation, whether or not the captured image 100 is the image that is suitable for the iris authentication operation.

Moreover, the iris detection unit 215 that detects the iris also uses the plurality of face feature points CP detected at the step S112 in FIG. 2 to perform the face authentication operation, as with the image determination unit 214. However, the iris detection unit 215 may also detect the iris based on any information that is generated to perform the face authentication operation, as with the image determination unit 214. Alternatively, the iris detection unit 215 may also detect the iris based on the information related to the feature of the face of the authentication target TP that is generated independently from the face authentication operation, as with the image determination unit 214.

In the above described description, the authentication system SYS includes the single camera 1. However, the authentication system SYS may include a plurality of cameras 1. For example, the authentication system SYS may include a first camera 1 for generating the captured image 100 that is mainly used for the face authentication operation by capturing the image of the authentication target TP and a second camera 1 for generating the captured image 100 that is mainly used for the iris authentication operation by capturing the image of the authentication target TP. In this case, the authentication apparatus 2 may perform the operations from the step S111 to the step S114 illustrated in FIG. 2 by using the captured image 100 captured by the first camera 1. Moreover, the authentication apparatus 2 may perform the operations from the step S121 to the step S123 illustrated in FIG. 2 by using the captured image 100 captured by the second camera 1. However, it is preferable that a relative positional relationship between the first camera 1 and the second camera 1 is an information that is known to the authentication apparatus 2. When the relative positional relationship between the first camera 1 and the second camera 1 is the information that is known to the authentication apparatus 2, the authentication apparatus 2 is capable of converting positions (namely, coordinates) of the plurality of face feature points CP in the captured image 100 captured by the first camera 1 into positions (namely, coordinates) of the plurality of face feature points CP in the captured image 100 captured by the second camera 1. As a result, the authentication apparatus 2 is capable of detecting the iris in the captured image 100 captured by the second camera 1 based on the plurality of face feature points CP generated from the captured image 100 captured by the first camera 1.

### (5) Supplementary Note

With respect to the example embodiments described above, the following Supplementary Notes will be further disclosed.

### [Supplementary Note 1]

An authentication apparatus including:
an iris authentication unit that is configured to authenticate an authentication target based on an iris feature information related to a feature of an iris of the authentication target in a captured image that is obtained by capturing an image of the authentication target; and
a determination unit that is configured to determine, based on a face feature information related to a feature of a face of the authentication target in the captured image, whether or not the captured image satisfies a predetermined condition that should be satisfied as an image used to authenticate the authentication target by using the iris feature information,
an operation of the authentication unit in a case where it is determined that the captured image satisfies the predetermined condition being different from an operation of the authentication unit in a case where it is determined that the captured image does not satisfy the predetermined condition.

### [Supplementary Note 2]

The authentication apparatus according to the Supplementary Note 1 further including:
a generation unit that is configured to generate the face feature information based on the captured image; and
a face authentication unit that is configured to authenticate the authentication target based on the face feature information generated by the generation unit,
the determination unit being configured to determine, based on the face feature information generated by the generation unit, whether or not the captured image satisfies the predetermined condition.

### [Supplementary Note 3]

The authentication apparatus according to the Supplementary Note 1 or 2, wherein
the iris authentication unit is configured to authenticate the authentication target based on the iris feature information when it is determined that the captured image satisfies the predetermined condition,
the iris authentication unit is configured not to authenticate the authentication target based on the iris feature information when it is determined that the captured image does not satisfy the predetermined condition.

### [Supplementary Note 4]

The authentication apparatus according to any one of the Supplementary Notes 1 to 3, wherein
the iris authentication unit is configured to authenticate the authentication target by a first authentication method based on the iris feature information when it is determined that the captured image satisfies the predetermined condition,
the iris authentication unit is configured to authenticate the authentication target by a second authentication method, which is different from the first authentication method, based on the iris feature information when it is determined that the captured image does not satisfy the predetermined condition.

### [Supplementary Note 5]

The authentication apparatus according to the Supplementary Note 4, wherein
the iris authentication unit is configured to authenticate that the authentication target is a person corresponding to one comparison feature information when a similarity degree between the iris feature information and the one comparison feature information that is prepared for a comparison with the iris feature information is higher than a predetermined threshold value,
the threshold value used in the second authentication method is larger than the threshold value used in the first authentication method.

### [Supplementary Note 6]

The authentication apparatus according to the Supplementary Note 4 or 5, wherein
the iris feature information is generated based on the captured image,
the number of the captured image used to generate the iris feature information in the second authentication method is larger than the number of the captured image used to generate the iris feature information in the first authentication method

### [Supplementary Note 7]

The authentication apparatus according to any one of the Supplementary Notes 1 to 6, wherein
the predetermined condition includes a first condition related to an opening degree of an eye of the authentication target included in the captured image.

### [Supplementary Note 8]

The authentication apparatus according to the Supplementary Note 7, wherein
the first condition includes a condition that the opening degree of the eye is larger than a predetermined opening degree.

### [Supplementary Note 9]

The authentication apparatus according to any one of the Supplementary Notes 1 to 8, wherein
the predetermined condition includes a second condition related to a direction of the face of the authentication target included in the captured image.

### [Supplementary Note 10]

The authentication apparatus according to the Supplementary Note 9, wherein
the second condition includes a condition that the authentication target faces a direction in which an imaging apparatus for capturing the image of the authentication target exists.

### [Supplementary Note 11]

The authentication apparatus according to the Supplementary Note 9 or 10, wherein
the second condition includes a condition that an angle between an axis along a direction toward which the face of the authentication target faces and an optical axis of an imaging apparatus for capturing the image of the authentication target is smaller than a predetermined angle.

### [Supplementary Note 12]

The authentication apparatus according to the Supplementary Note 11, wherein
the predetermined angle that is used in a case where the face of the authentication target faces downwardly is smaller than the predetermined angle that is used in a case where the face of the authentication target faces upwardly is smaller.

### [Supplementary Note 13]

The authentication apparatus according to any one of the Supplementary Notes 1 to 12, wherein
the predetermined condition includes a third condition related to a bokeh of the face of the authentication target included in the captured image.

### [Supplementary Note 14]

The authentication apparatus according to the Supplementary Note 13, wherein
the third condition includes a condition that a degree of the bokeh is within an allowable value..

### [Supplementary Note 15]

An authentication method including:
an authentication step at which an authentication target is authenticated based on an iris feature information related to a feature of an iris of the authentication target in a captured image that is obtained by capturing an image of the authentication target; and
a determination step at which it is determined, based on a face feature information related to a feature of a face of the authentication target in the captured image, whether or not the captured image satisfies a predetermined condition that should be satisfied as an image used to authenticate the authentication target by using the iris feature information,
an operation performed at the authentication step in a case where it is determined that the captured image satisfies the predetermined condition being different from an operation performed at the authentication step in a case where it is determined that the captured image does not satisfy the predetermined condition.

### [Supplementary Note 16]

A computer program that allows a computer to execute an authentication method,
the authentication method including:
an authentication step at which an authentication target is authenticated based on an iris feature information related to a feature of an iris of the authentication target in a captured image that is obtained by capturing an image of the authentication target; and
a determination step at which it is determined, based on a face feature information related to a feature of a face of the authentication target in the captured image, whether or not the captured image satisfies a predetermined condition that should be satisfied as an image used to authenticate the authentication target by using the iris feature information,
an operation performed at the authentication step in a case where it is determined that the captured image satisfies the predetermined condition being different from an operation performed at the authentication step in a case where it is determined that the captured image does not satisfy the predetermined condition.

### [Supplementary Note 17]

A non-transitory recording medium on which a computer program that allows a computer to execute an authentication method is recorded,
the authentication method including:
an authentication step at which an authentication target is authenticated based on an iris feature information related to a feature of an iris of the authentication target in a captured image that is obtained by capturing an image of the authentication target; and
a determination step at which it is determined, based on a face feature information related to a feature of a face of the authentication target in the captured image, whether or not the captured image satisfies a predetermined condition that should be satisfied as an image used to authenticate the authentication target by using the iris feature information,
an operation performed at the authentication step in a case where it is determined that the captured image satisfies the predetermined condition being different from an operation performed at the authentication step in a case where it is determined that the captured image does not satisfy the predetermined condition.

The present disclosure is allowed to be changed, if desired, without departing from the essence or spirit of the invention which can be read from the claims and the entire specification, and an authentication apparatus, an authentication method, a computer program and a recording medium, which involve such changes, are also intended to be within the technical scope of the present disclosure.

### Description of Reference Codes

- SYS: authentication system
- 1: camera
- 2: authentication apparatus
- 21: arithmetic apparatus
- 211: face detection unit
- 212: face feature amount generation unit
- 213: face authentication unit
- 214: image determination unit
- 215: iris detection unit
- 216: iris feature amount generation unit
- 217: iris authentication unit
- 22: storage apparatus
- 23: communication apparatus
- 100: captured image
- 101: face region
- 110: face image
- 102: eye region
- 103: iris region
- 130: iris image
- CP: face feature point

## Claims

1. An authentication apparatus comprising:
an iris authentication unit that is configured to authenticate an authentication target based on an iris feature information related to a feature of an iris of the authentication target in a captured image that is obtained by capturing an image of the authentication target; and
a determination unit that is configured to determine, based on a face feature information related to a feature of a face of the authentication target in the captured image, whether or not the captured image satisfies a predetermined condition that should be satisfied as an image used to authenticate the authentication target by using the iris feature information,
an operation of the iris authentication unit in a case where it is determined that the captured image satisfies the predetermined condition being different from an operation of the iris authentication unit in a case where it is determined that the captured image does not satisfy the predetermined condition.

2. The authentication apparatus according to claim 1 further comprising:
a generation unit that is configured to generate the face feature information based on the captured image; and
a face authentication unit that is configured to authenticate the authentication target based on the face feature information generated by the generation unit,
the determination unit being configured to determine, based on the face feature information generated by the generation unit, whether or not the captured image satisfies the predetermined condition.

3. The authentication apparatus according to claim 1 or 2, wherein
the iris authentication unit is configured to authenticate the authentication target based on the iris feature information when it is determined that the captured image satisfies the predetermined condition,
the iris authentication unit is configured not to authenticate the authentication target based on the iris feature information when it is determined that the captured image does not satisfy the predetermined condition.

4. The authentication apparatus according to any one of claims 1 to 3, wherein
the iris authentication unit is configured to authenticate the authentication target by a first authentication method based on the iris feature information when it is determined that the captured image satisfies the predetermined condition,
the iris authentication unit is configured to authenticate the authentication target by a second authentication method, which is different from the first authentication method, based on the iris feature information when it is determined that the captured image does not satisfy the predetermined condition.

5. The authentication apparatus according to any one of claims 1 to 4, wherein
the predetermined condition includes a first condition related to an opening degree of an eye of the authentication target included in the captured image.

6. The authentication apparatus according to claim 5, wherein
the first condition includes a condition that the opening degree of the eye is larger than a predetermined opening degree.

7. The authentication apparatus according to any one of claims 1 to 6, wherein
the predetermined condition includes a second condition related to a direction of the face of the authentication target included in the captured image.

8. The authentication apparatus according to any one of claims 1 to 7, wherein
the predetermined condition includes a third condition related to a bokeh of the face of the authentication target included in the captured image.

9. An authentication method comprising:
an authentication step at which an authentication target is authenticated based on an iris feature information related to a feature of an iris of the authentication target in a captured image that is obtained by capturing an image of the authentication target; and
a determination step at which it is determined, based on a face feature information related to a feature of a face of the authentication target in the captured image, whether or not the captured image satisfies a predetermined condition that should be satisfied as an image used to authenticate the authentication target by using the iris feature information,
an operation performed at the authentication step in a case where it is determined that the captured image satisfies the predetermined condition being different from an operation performed at the authentication step in a case where it is determined that the captured image does not satisfy the predetermined condition.

10. Anon-transitory recording medium on which a computer program that allows a computer to execute an authentication method is recorded,
the authentication method comprising:
an authentication step at which an authentication target is authenticated based on an iris feature information related to a feature of an iris of the authentication target in a captured image that is obtained by capturing an image of the authentication target; and
a determination step at which it is determined, based on a face feature information related to a feature of a face of the authentication target in the captured image, whether or not the captured image satisfies a predetermined condition that should be satisfied as an image used to authenticate the authentication target by using the iris feature information,
an operation performed at the authentication step in a case where it is determined that the captured image satisfies the predetermined condition being different from an operation performed at the authentication step in a case where it is determined that the captured image does not satisfy the predetermined condition.
